# EUROPEAN PATENT APPLICATION

(11) **EP 3 901 548 A2**
(43) Date of publication of application: **27.10.2021**
(21) Application number: 21164462.0
(22) Date of filing: 24.03.2021
(51) Int. Cl.: F28D 1/03, F28D 9/00, F28F 1/00, F28F 3/00, F28F 3/12, F28F 9/00, F28F 13/00, F17C 1/00, F17C 3/04, F17C 3/10, B33Y 10/00, B33Y 80/00

(54) **ADDITIVELY MANUFACTURED SUPPORT STRUCTURE FOR BARRIER LAYER**

(30) Priority: 30.03.2020 US 202063001776 P
(71) Applicant: Hamilton Sundstrand Corporation, Charlotte, NC 28217-4578 (US)
(72) Inventor: COLSON, Paul M., Westfield, MA 01085 (US); ZAGER, Michael, Windsor, CT 06095 (US); KOWALSKI, John W., Hadley, MA 01035 (US); KILLEN, Thomas James, West Hartford, CT 06119 (US)
(74) Representative: Dehns

(57) **Abstract**

A vessel (10) or heat exchanger (142) includes an exterior container (12, 112), an interior container (20, 120), and a support structure in the form of a lattice structure (26, 126). The exterior container (12, 112) is formed by an exterior wall (14, 114) that prevents transmission of a fluid. The interior container (20, 120) is formed by an interior wall (22, 122) disposed within the exterior container (12, 112) such that the exterior container (12, 112) encapsulates the interior container (20, 120). The interior wall (22, 122) and the exterior wall (14, 114) are separated by a gap (24, 124) defining a barrier void. The interior wall (22, 122) prevents transmission of a fluid across the interior wall (22, 122). The support structure (26, 126) is disposed within the barrier void between the exterior wall (14, 114) and the interior wall (22, 122). The support structure (26, 126) comprises a lattice and is integrally formed with the exterior wall (14, 114) and the interior wall (22, 122). The support (26, 126) structure is connected to and extends between the exterior wall (14, 114) and the interior wall (22, 122).

## Description

### BACKGROUND

In general, the present disclosure relates to heat exchangers. In particular, the present disclosure relates to a support structure positioned in a barrier layer of a heat exchanger.

Existing "double wall" configurations for barrier passages in pressure vessels (e.g., heat exchangers) are not ideal for applications requiring maximum heat transfer between the interior and exterior surface of the pressure vessel due to the empty volume between walls acting as an insulating thermal barrier.

Practical limitations of traditional manufacturing methods create limited geometry, shape, and arrangement of internal features in components such as heat exchangers. These limitations can constrain thermal energy transfer and fluid flow performance in the heat exchanger. Additionally, the ability to handle high pressures, temperatures, and their associated transient conditions can be diminished as well.

### SUMMARY

A vessel includes an exterior container, an interior container, and a support structure. The exterior container is formed by an exterior wall that prevents transmission of a fluid. The interior container is by an interior layer disposed within the exterior container such that the exterior container encapsulates the interior container. The interior layer and the exterior wall are separated by a gap defining a barrier void. The interior layer prevents transmission of a fluid across the interior layer. The support structure is disposed within the barrier void between the exterior wall and the interior layer. The support structure comprises a lattice and is integrally formed with the exterior wall and the interior layer. The support structure is connected to and extends between the exterior wall and the interior layer.

A heat exchanger includes an exterior container, an interior container, a stack of layers, and a third portion. The exterior container is formed by an exterior wall that is non-permeable to a fluid. The interior container is formed by an interior wall that is non-permeable to a fluid. The interior container is disposed within the exterior container such that the exterior container encapsulates the interior container. The interior wall and the exterior wall are separated by a gap that defines a barrier void. Each layer of the stack of layers includes a portion of the interior container and a portion of the external container. The third portion is disposed within the barrier void and between the exterior wall and the interior wall. The third portion is integrally formed with the exterior wall and the interior wall via additive manufacturing. The third portion includes a lattice and is connected to and extends between the exterior wall and the interior wall.

A method of making a vessel includes forming a first portion with layer-by-layer additive manufacturing. The first portion defines an exterior container with at least one exterior wall that is non-permeable to a fluid. The second portion is formed with layer-by-layer additive manufacturing and defines at least one interior wall that is non-permeable to the fluid. The second portion defines an interior container encapsulated by the first container. The at least one third portion is formed with layer-by-layer additive manufacturing and has a lattice structure disposed between the at least one exterior wall and the at least one interior wall. The third portion is integrally formed with the first portion and the second portion.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1 is a perspective partial cross-section view of a pressure vessel with a barrier layer.
FIGS. 2A-2H are cross-section views of various barrier passage lattice support structure designs.
FIGS. 3A and 3B are perspective views of interior and exterior walls, respectively, of a heat exchanger.
FIG. 4 is a perspective view of a single layer of the heat exchanger and includes a cut-out showing a lattice support structure.

While the above-identified figures set forth one or more embodiments of the present disclosure, other embodiments are also contemplated, as noted in the discussion. In all cases, this disclosure presents embodiments by way of representation and not limitation. It should be understood that numerous other modifications and embodiments can be devised by those skilled in the art, which fall within the scope and spirit of the principles of the disclosure. The figures may not be drawn to scale, and applications and embodiments of the present disclosure may include features and components not specifically shown in the drawings.

### DETAILED DESCRIPTION

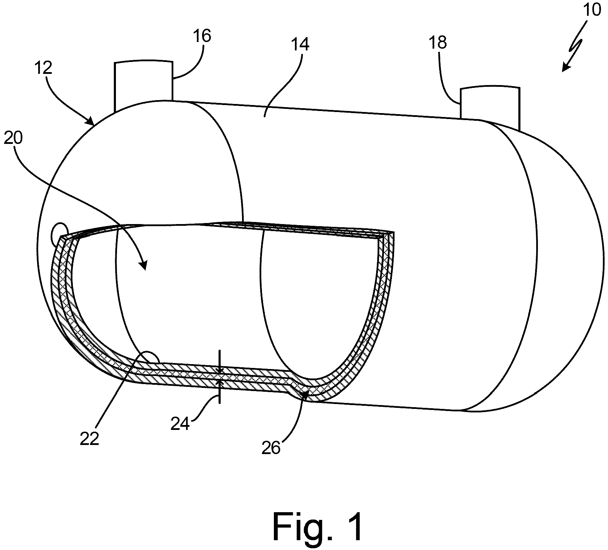

FIG. 1 is a perspective partial cross-section view of pressure vessel 10 and shows exterior container 12, (with exterior wall 14), inlet 16, outlet 18, interior container 20 (with interior wall 22), gap 24, and third portion 26.

Pressure vessel 10 is a container configured to hold a pressurized fluid or fluids. In this example, pressure vessel 10 is configured as a double-wall pressure vessel. Pressure vessel 10 can be a reactive fluid heat exchanger. Exterior container 12 and interior container 20 are enclosed capsules. Exterior wall 14 and interior wall 22 are curved sheets of solid material. In this example, exterior wall 14 and interior wall 22 include cylindrical shapes with rounded ends. Inlet 16 and outlet 18 are fluidic ports. Gap 24 is a space or void. In this example, gap 24 is a barrier void or barrier layer of pressure vessel 10. As used herein, the terms "barrier void" and "barrier layer" are used synonymously. In this particular example, gap 24 is shown as a double-wall barrier passage. Third portion 26 is a support structure. In this example, third portion 26 includes a lattice of solid material.

In one example, pressure vessel 10 can be disposed in an aircraft and/or fluidly connected to a fluid management system of the aircraft, such as an air cycle machine or an environmental control system. Exterior container 12 contains or encapsulates interior container 20, gap 24, and third portion 26. Exterior wall 14 is disposed outward of interior wall 22 and is integrally formed together with third portion 26 via layer-by-layer additive manufacturing. Inlet 16 and outlet 18 are disposed in different portions of exterior wall 14. Inlet 16 and outlet 18 extend into pressure vessel 10 and connect to interior wall 22 such that inlet 16 and outlet 18 fluidly connect an interior cavity of interior container 20 to an ambient environment external to pressure vessel 10. Interior container 20 is disposed and mounted within exterior container 12. Interior wall 22 is disposed inside of exterior wall 14 and is integrally connected to third portion 26 via layer-by-layer additive manufacturing. Gap 24 is disposed and extends between exterior wall 14 and interior wall 22. Third portion 26 is disposed in gap 24 and is integrally connected to exterior wall 14 and interior wall 22 via layer-by-layer additive manufacturing.

In this non-limiting example, pressure vessel 10 is a heat exchanger configured to transfer thermal energy to/from a first fluid inside of interior container 20 from/to a second fluid outside of exterior container 12. Pressure vessel 10 and its components are produced via layer-by-layer additive manufacturing such that every component of pressure vessel 10 is integrally formed together as a single piece of material. Exterior container 12 and interior container 20 contain and/or encapsulate a fluid or fluids. Exterior wall 14 provides an outer barrier of external container 12 and is configured to prevent transmission of a fluid across exterior wall 14. Inlet 16 receives a fluid from outside of pressure vessel 10 and transports the fluid into interior container 20. Outlet 18 transports the fluid from inside of interior container 20 to outside of pressure vessel 10. In one example, inlet 16 and/or outlet 18 can be fluidly connected to a component or components of the environmental control system or another engine component of the aircraft.

Interior wall 22 is a structural wall that serves as an inner fluid barrier of interior container 20. Gap 24 acts as a barrier layer and potential flow path in the case of a leak of a fluid from either exterior wall 14 or interior wall 22 into gap 24. Gap 24 also is a barrier layer and safety mechanism to prevent mixing of reactive fluids. In this example, gap 24 provides a flow path for any fluid that leaks into gap 24 either through internal layer 22 or exterior wall 14. Third portion 26 provides structural support and thermal energy conduction between exterior wall 14 and interior wall 22. In this example, third portion 26 can be used to maximize thermal conduction.

The lattice pattern of third portion 26 is accomplished by layer-by-layer additive manufacturing. Additionally, third portion 26 is designed to allow for layer-by-layer additive manufacture construction without the requirement of third portions during the build process as well as allowing for powder removal after manufacture of pressure vessel 10. The density and geometry of third portion 26 in gap 24 (e.g., the barrier region) are selected based on associated structural loading of pressure vessel 10 to allow for rupture of interior wall 22 (e.g., that can be in contact with the higher pressure fluid), for leakage of the fluid into gap 24 without failure, and for leakage also to be passed through exterior wall 14. Gap 24 can then be routed to collection points (not shown) to allow for any leakages to be detected and thereby indicating necessary replacement or repair of pressure vessel 10.

In general, pressure vessel 10 with third portion 26 provides a lightweight means for routing a leak to a safe location while still providing heat transfer capability through a lattice (i.e., third portion 26) between the walls (i.e., exterior wall 14 and interior wall 22) of pressure vessel 10. Third portion 26 acts as a thermal load carrying element to improve heat transfer between exterior wall 14 and interior wall 22. Third portion 26 is arranged to maximize thermal load carrying while also limiting structural and thermal stresses across pressure vessel 10. Third portion 26 remains dense enough to act as a structural load carrying member and is permeable enough to allow a fluid to pass through whether from leakage into gap 24. In this way, pressure vessel 10 with integrally formed third portion 26 provides integral pressure vessel walls containing a barrier passage (e.g., gap 24) therebetween.

With the incorporation of additively manufacturing third portion 26 together with pressure vessel 10, manufacturing time of pressure vessel 10 is reduced and potential leak paths are reduced. For example, with pressure vessel 10 and third portion 26 being additively manufactured as one integral piece of material, the absence of joining various sub-components through welding, brazing, or other joining methods eliminates the presence of potential leaks paths at joining seams.

Another benefit of pressure vessel 10 with third portion 26 is a reduced weight of pressure vessel 10 due to the thickness of the walls (e.g., exterior wall 14 and interior wall 22) being reduced due to the structural load carrying capability of third portion 26. Geometries of pressure vessel 10 and of third portion 26 can be contoured and conformal to meet packaging needs and can be optimized based on structural loading requirements of pressure vessel 10. Gap 24 with third portion 26 can be carried or transitioned through associated piping (e.g., inlet 16 and outlet 18) and headers without the added weight and/or complexity of multiple components. Likewise, dimensions of gap 24 can be varied depending on the required flow rate(s) and pressure of the fluid in specific areas of pressure vessel 10. Third portion 26 also provides improved thermal energy transfer between fluid internal and external to pressure vessel 10. For example, a conduction path between exterior container 12 and interior container 20 is improved compared to traditional designs without third portion 26.

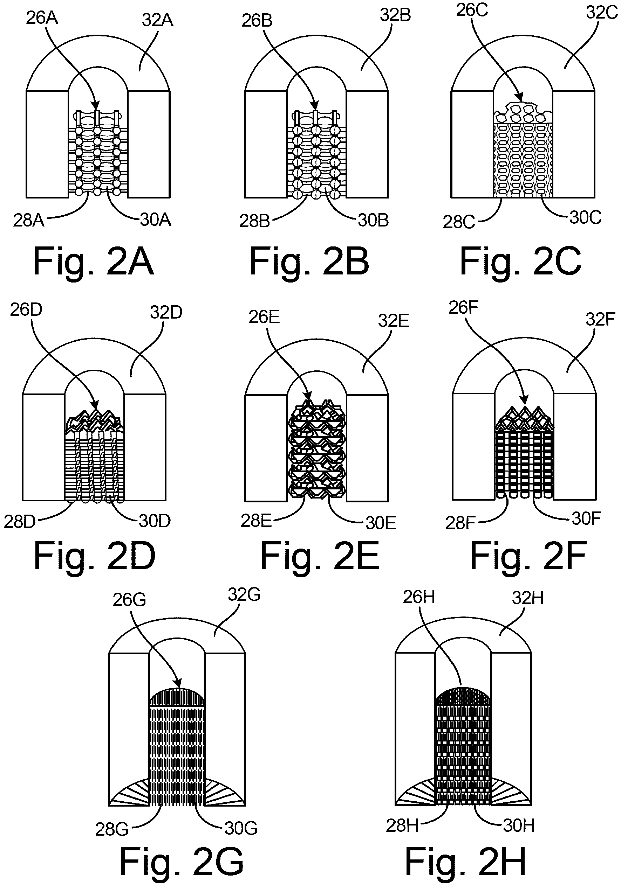

FIGS. 2A-2H are cross-section views of various designs of third portion 26, which are respectively depicted across FIGS. 2A-2H as third portions 26A-26H.

Third portions 26A-26H are lattices with various shapes and configurations. FIG. 2A shows third portion 26A (with rods 28A and opening 30A) and pipe 32A. The lattice configuration of third portion 26A includes rods 28A and openings 30A. Rods 28A are elongate pieces of solid material. In this example, a diameter of each of rods 28A can be from 0.001 inches to 0.05 inches. As shown here, rods 28A can include a variable diameter that expands towards the ends of each of rods 28A. In other examples, a diameter of rods 28A can include a constant diameter. Openings 30A are spaces or voids. As shown in FIGS. 2A-2H, pipes 32A-32H are included in the image to provide an example structure disposed adjacent to and in connection with third portions 26A-26H. For example, pipes 32A-32H can be either one of exterior wall 14 or interior wall 22 shown in FIG. 1.

Rods 28A are connected to and integrally formed with inner surfaces of pipe 32A via layer-by-layer additive manufacturing. In this example, rods 28A are interconnected such that adjacent and adjoining rods connect to each other at orthogonal or right angles. In one non-limiting embodiment, the connection points of rods 28A can be called nodes. Openings 30A extend between rods 28A. In this example, openings 30A include a generally cuboid shape due to the orthogonal arrangement of rods 28A. In one non-limiting embodiment, openings 30A are all interconnected to form an open volume that is a continuous open cell network of voids and spaces.

Rods 28A of third portion 26A are structural load carrying members. Openings 30A make third portion 26A permeable enough to allow a fluid to pass through structural member 26A, whether from fluid leakage into gap 24 (see e.g., FIG. 1) or for draining the fluid to a collection or supply point disposed in pressure vessel 10. The lattice configuration of structure 26A is formed by layer-by-layer additive manufacturing. The design described herein permits construction of third portion 26A without the need for supports during the build process and allows for powder removal after manufacture of pressure vessel 10. A density and a geometric design of third portion 26A is also developed based on the associated structural loading to allow for a rupture in interior wall 22 (that can be in contact with a higher pressure fluid) and/or leakage of a fluid of into gap 24 without failure of pressure vessel 10.

Third portion 26B shown in FIG. 2B includes an orthogonal configuration of rods 28B similar to third portion 26A shown in FIG. 2A. In comparison to third portions 26A, a diameter of rods 28B of third portions 26B is larger and increases more near ends of each of rods 28B. Due to this, a shape of openings 30B include more of an ellipsoid or spherical shape as compared to openings 30A. Due to the increased thickness of rods 28B and size of connection points or nodes of third portion 26B, third portion 26B can provide increased structural support as well as increased thermal conductivity.

Third portion 26C shown in FIG. 2C includes a sheet-like configuration with multiple sheets 28C stacked next to each other. Sheets 28C include openings 30C, which include a generally circular or octagonal shape. In this sheet-like configuration, a greater amount of structural support can be provided along a particular axis of third portion 26C, such as in a direction of planes of sheets 28C (e.g., in a horizontal direction as shown in FIG. 2C).

Third portion 28D shown in FIG. 2D includes an angular array of rods 30D. For example, in comparison to the orthogonal intersections of rods 28A in FIG. 2A, angles of connections points or nodes of rods 28D are less than 90°. This angular array of rods 28D causes openings 30D to include more of a pyramidal shape as compared to openings 30A-30C. Such an angular array of rods 28D in third portion 26D can provide structural support along a plurality of directions in comparison to along one or two directional planes. Third portion 26E in FIG. 2E is similar to third portion 26D, however third portion 26E includes rods 28E that are longer than rods 28D as well as openings 30E that are larger than openings 30D.

In comparison, third portion 26F in FIG. 2F includes rods 28F that are shorter than both rods 28D and 28E, as well as openings 30F that are smaller than openings 30D and 30E. These variations in sizes provide for varying degrees of structural support and thermal energy transfer between fluids flowing through interior container 20 and flowing across exterior container 12. As shown in FIGS. 2D, 2E, and 2F, the shape of third portions 26D, 26E, and 26F include a truss configuration. Third portions 26G and 26H in FIGS. 2G and 2H include a screen or mesh configuration of rods 28G and 28H, respectively. Here, structural support 26H is less dense than structural support 26G, allowing for a higher rate of flow of a fluid across and through rods 28H of third portion 26H than through rods 28G of third portion 26G.

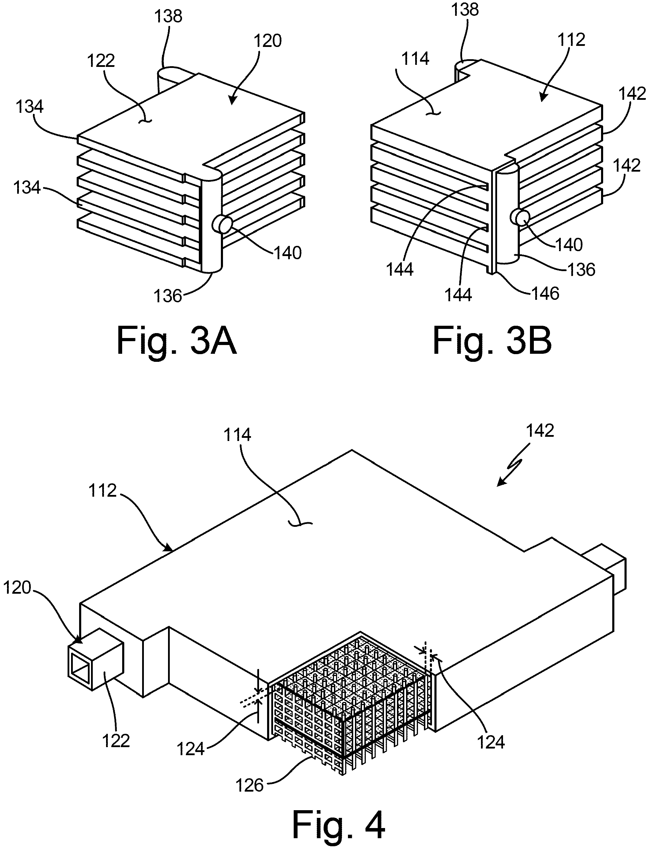

FIG. 3A is a perspective view of interior container 120 and shows interior wall 122, layers 134, first header 136, second header 138, and port 140. FIG. 3B is a perspective view of exterior container 112 and shows exterior wall 114, layers 142, connections 144, and drain port 146. FIGS. 3A and 3B are herein discussed in tandem.

In this example, interior container 120 is an interior container of a heat exchanger. Interior wall 122 is an external surface of interior container 120. Layers 134 are levels or discrete planar portions of interior container 120. First header 136 and second header 138 are conduits configured to direct a flow of a fluid. Port 140 is a tube or orifice in first header 136. Exterior container 112 is an external container of the heat exchanger. Exterior wall 114 is an external surface of external container 112. Layers 142 are levels or discrete planar portions of exterior container 112. Connections 144 and drain port 146 are channels.

In FIG. 3A, interior container 120 is shown in isolation. In FIG. 3B, interior container 120 is shown as disposed inside of exterior container 112. Interior wall 122 wraps and extends around interior container 120 to form an external fluidic barrier of interior container 120. Layers 134 of interior container 120 are disposed in a stack pattern and are in fluid communication with each other via first and second headers 136 and 138. First header 136 and second header 138 are disposed on opposite corners of interior container 120. Both of first header 136 and second header 138 are connected to and in fluid communication with each of layers 134. Port 140 is mounted onto and fluidly connected to first header 136. In another example, there can be a second corresponding port similarly situated on second header 138. Exterior container 112 surrounds and contains interior container 120. Exterior wall 114 surrounds and contains interior wall 122 of interior container 120. Layers 142 of exterior container 114 are disposed in a stack pattern similar to layers 134 of interior container 120. Connections 144 extend between and fluidly connected adjacent layers 142 of external container 114. Drain port 146 is disposed on a bottom corner of exterior container 112. Drain port 146 is fluidly connected to an internal cavity of exterior container 112 formed by exterior wall 114.

During operation of the heat exchanger of which interior container 120 and exterior container 112 are parts of, a first fluid is passed through interior container 120 and a second fluid is drawn across the outside of exterior wall of 114 of exterior container 112. The first fluid enters into first header 136 via port 140, into layers 134 of interior container 120, and out of interior container 120 through second header 138. As the first and second fluids flow through and across interior container 120 and exterior container 112, thermal energy is transferred across interior wall 122 and exterior wall 114 between the first and second fluids.

In an instance where the first fluid or the second fluid leaks into the space or gap between interior wall 122 and exterior wall 114, connections 144 provide a fluidic pathway by which the leaked fluid can travel through and towards drain port 146. Once the leaked fluid reaches drain port 146, the fluid can be withdrawn, detected, and/or sensed to indicate the presence of a leak.

FIG. 4 is a perspective view of a single layer 142 of the stack of layers 142 and shows exterior container 112, exterior wall 114, interior container 120, interior wall 122, gap 124, and third portion 126. FIG. 4 shows a portion of exterior wall 114 cut-away to show gap 124 and third portion 126. In this example, layer 142 is one of layers 142 shown in FIG. 3B.

Gap 124 is a space or void disposed and extending between interior wall 122 of interior container 120 and exterior wall 114 of exterior container 112. In this example, gap 124 is a barrier passage of a heat exchanger. Third portion 126 is a lattice of solid material disposed in gap 124. In this example, third portion 126 is shown as including orthogonal intersection points such as those displayed in FIG. 2A. In other non-limiting embodiments, the lattice type and/or configuration of third portion 126 in FIG. 4 can include any of the lattice configurations shown in FIGS. 2A-2H.

In this example, exterior wall 114 forms an enclosed container that encases interior container 120 and third portion 126. Gaps 124 form a flow path envelope surrounding interior container 120. Gap 124 is in fluid communication with drain port 146 via connections 144 (see e.g., drain port 146 and connections 144 in FIG. 3B). Third portion 126 is connected to and integrally formed with exterior wall 114 and interior wall 122 via layer-by-layer additive manufacturing.

In this embodiment of incorporating third portion 126 in gap 124 between fluid channels, there can be complex loading both structurally and thermally between exterior container 112 and interior container 120. The interfacing fluid channels typically contain fluids at varying pressures as well as varying temperatures and transients related to the structural and thermal loads. In this example of a rectangular heat exchanger where the channels containing two different fluids are stacked on top of one another, there can be differential expansion and deformation that varies by the x, y and z direction of both exterior wall 114 and interior wall 122. When the fluid is at a very low temperature and the second fluid in an interfacing channel is at a high temperature, differential thermal expansion occurs creating significant mechanical stress in the structure(s) between them. Other loads such as varying pressures or rapid thermal transients will similarly develop.

In this example, gap 124 (e.g., a barrier layer) is positioned between the two fluids and contains third portion 126 that both acts as a structural element of the heat exchanger as well as a thermal energy conductor. With the design and configuration of third portion 126, various parameters that control the lattice (e.g., rod diameter, lattice solid vs. open volume, number of interconnected rods/struts, spacing of central lattice nodes, rod size at lattice node, conformality of lattice to interfacing structures, pressure drop of lattice structure with passing fluid flow, etc.) can be varied depending a location of third portion 126 in the heat exchanger as well as being based on a direct relationship between interfacing fluid channels, distance from headers (e.g., first and second headers 136 and 138), distance from mounting connections, distance from fluid inlets and exits (e.g., port 140), and distance from heat exchanger walls. For example, there may be an area in the heat exchanger with a large pressure delta in a first direction and a large thermal delta in a second direction, the aforementioned lattice variables can be adjusted to provide stiffness, and support other structural elements, in reacting to the pressure load along the first direction but incorporate reduced stiffness in the second direction of the thermal loads allowing the heat exchanger to further deform thereby reducing stress.

In one example, the lattice configuration of third portion 126 can be tuned to meet performance criteria or operational parameters of the heat exchanger. For example, tuning of the lattice configuration of third portion 126 can be defined as locally controlling all the variables that make up the lattice to allow optimization of the overall heat exchanger. If the heat exchanger was defined into a rectangular or polar array of different nodes, the lattice variables can be tuned at each of those nodes to allow optimization of the overall heat exchanger design needs. A further tuning of the lattice can provide optimization of the lattice thermal energy transfer between fluids and the overall lattice weight (for weight sensitive applications).

In one example, a methodology for defining the lattice geometry of third portion 126 can be to include an iterative cycle and the use of a multi-physics analysis model. In such an example, a baseline model can be analyzed by utilizing computational flow dynamics and/or finite element analysis to calculate the associated global stresses created from the associated loads (e.g., temperature deltas between the first and second fluids, an external skin surface temperature of the heat exchanger, temperature transients, pressure deltas between interfacing fluids, mounting loads, etc.). Based on the associated stresses and deformation of the heat exchanger as well as the performance, packaging, and life requirements for the heat exchanger, the lattice configuration of third portion 126 can be generated manually based on operator knowledge and further upon analysis iterations completed and/or through specific topology optimization or lattice optimization tools. Due to the number of variables and complex loading of which the lattice is being tuned for, certain requirements can be prioritized the methodology to be developed. For example, tuning the lattice so as to increase or reduce thermal performance in order to improve the life of the heat exchanger.

### Discussion of Possible Embodiments

A vessel includes an exterior container, an interior container, and a support structure. The exterior container is formed by an exterior wall that prevents transmission of a fluid. The interior container is by an interior layer disposed within the exterior container such that the exterior container encapsulates the interior container. The interior layer and the exterior wall are separated by a gap defining a barrier void. The interior layer prevents transmission of a fluid across the interior layer. The support structure is disposed within the barrier void between the exterior wall and the interior layer. The support structure comprises a lattice and is integrally formed with the exterior wall and the interior layer. The support structure is connected to and extends between the exterior wall and the interior layer.

The vessel of the preceding paragraph can optionally include, additionally and/or alternatively, any one or more of the following features, configurations and/or additional components.

The vessel can be a heat exchanger comprising a stack of layers, wherein each layer can comprise a portion of the interior container and/or a portion of the external container.

The third portion can be configured to transfer thermal energy between the first portion and the second portion.

The third portion can be configured to transfer vibrational loads between the first portion and the second portion.

The interior wall and the exterior wall can be separated by a gap that defines a barrier void, wherein the barrier void can form a flow path envelope surrounding the interior container.

The interior wall and the exterior wall can be separated by a gap that defines a barrier void, wherein the barrier void can be in fluid communication with a drain port of the vessel.

The lattice structure of the third portion can comprise a truss pattern.

A heat exchanger includes an exterior container, an interior container, a stack of layers, and a third portion. The exterior container is formed by an exterior wall that is non-permeable to a fluid. The interior container is formed by an interior wall that is non-permeable to a fluid. The interior container is disposed within the exterior container such that the exterior container encapsulates the interior container. The interior wall and the exterior wall are separated by a gap that defines a barrier void. Each layer of the stack of layers includes a portion of the interior container and a portion of the external container. The third portion is disposed within the barrier void and between the exterior wall and the interior wall. The third portion is integrally formed with the exterior wall and the interior wall via additive manufacturing. The third portion includes a lattice and is connected to and extends between the exterior wall and the interior wall.

The heat exchanger of the preceding paragraph can optionally include, additionally and/or alternatively, any one or more of the following features, configurations and/or additional components.

A plurality of connections can extend between the layers of the stack of layers, wherein each connection of the plurality of connections fluidly can connect adjacent layers of the stack of layers.

A drain port can be disposed in the exterior container, wherein the drain port can be in fluid communication with the plurality of connections and/or with the barrier void.

The lattice pattern of the third portion can comprise a truss pattern.

A method of making a vessel includes forming a first portion with layer-by-layer additive manufacturing. The first portion defines an exterior container with at least one exterior wall that is non-permeable to a fluid. The second portion is formed with layer-by-layer additive manufacturing and defines at least one interior wall that is non-permeable to the fluid. The second portion defines an interior container encapsulated by the first container. The at least one third portion is formed with layer-by-layer additive manufacturing and has a lattice structure disposed between the at least one exterior wall and the at least one interior wall. The third portion is integrally formed with the first portion and the second portion.

The method of the preceding paragraph can optionally include, additionally and/or alternatively, any one or more of the following steps, features, configurations and/or additional components.

A stack of layers can be formed, wherein each layer can comprise a portion of the interior container and a portion of the external container, wherein the vessel can be a heat exchanger.

The third portion can be configured to transfer thermal energy between the first portion and the second portion.

The third portion can be configured to transfer vibrational loads between the first portion and the second portion.

The interior wall and/or the exterior wall can be formed such that the interior wall and the exterior wall can be separated by a gap that defines a barrier void, wherein the barrier void can form a flow path envelope surrounding the interior container.

The interior wall and/or the exterior wall can be formed such that the interior wall and the exterior wall can be separated by a gap that defines a barrier void, wherein the barrier void can be in fluid communication with a drain port of the vessel.

The lattice structure of the third portion can be formed to include a truss pattern.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

**1.** A vessel (10) comprising:
a first portion defining at least one exterior wall that is non-permeable to a fluid, the first potion defining an exterior container;
a second portion defining at least one interior wall that is non-permeable to the fluid, the second portion defining an interior container encapsulated by the first container; and
at least one third portion having a lattice structure disposed between the at least one exterior wall and the at least one interior wall, the third portion being integrally formed with the first portion and the second portion.

**2.** The vessel of claim 1, wherein the vessel (10) is a heat exchanger comprising a stack of layers, wherein each layer comprises a portion of the interior container and a portion of the external container.

**3.** The vessel of claim 1 or 2, wherein the third portion is configured to transfer thermal energy between the first portion and the second portion, or wherein the third portion is configured to transfer vibrational loads between the first portion and the second portion.

**3.** The vessel of any preceding claim, wherein the interior wall and the exterior wall are separated by a gap that defines a barrier void, wherein the barrier void forms a flow path envelope surrounding the interior container, or wherein the interior wall and the exterior wall are separated by a gap that defines a barrier void, wherein the barrier void is in fluid communication with a drain port of the vessel.

**4.** The vessel of any preceding claim, wherein the lattice structure of the third portion comprises a truss pattern.

**5.** A heat exchanger comprising:
an exterior container (112) formed by an exterior wall that is non-permeable to a fluid;
an interior container (120) formed by an interior wall that is non-permeable to a fluid, wherein the interior container (120) is disposed within the exterior container such that the exterior container encapsulates the interior container, wherein the interior wall (122) and the exterior wall (144) are separated by a gap that defines a barrier void;
a stack of layers, wherein each layer comprises a portion of the interior container and a portion of the external container; and
a third portion disposed within the barrier void and between the exterior wall and the interior wall, wherein the third portion is integrally formed with the exterior wall and the interior wall via additive manufacturing, wherein the third portion is connected to and extends between the exterior wall and the interior wall, wherein the third portion comprises a lattice.

**6.** The heat exchanger of claim 5, further comprising a plurality of connections extending between the layers of the stack of layers, wherein each connection of the plurality of connections fluidly connects adjacent layers of the stack of layers, .

**7.** The heat exchanger of claim 6, further comprising a drain port disposed in the exterior container, wherein the drain port is in fluid communication with the plurality of connections and with the barrier void.

**8.** The heat exchanger of claim 5, 6 or 7, wherein the lattice pattern of the third portion comprises a truss pattern.

**9.** A method of making a vessel, the method comprising:
forming, with layer-by-layer additive manufacturing, a first portion defining at least one exterior wall that is non-permeable to a fluid, the first potion defining an exterior container;
forming, with layer-by-layer additive manufacturing, a second portion defining at least one interior wall that is non-permeable to the fluid, the second portion defining an interior container encapsulated by the first container; and
forming, with layer-by-layer additive manufacturing, at least one third portion having a lattice structure disposed between the at least one exterior wall and the at least one interior wall, the third portion being integrally formed with the first portion and the second portion.

**10.** The method of claim 9, further comprising forming a stack of layers, wherein each layer comprises a portion of the interior container and a portion of the external container, wherein the vessel is a heat exchanger.

**11.** The method of claim 9 or 10, wherein the third portion is configured to transfer thermal energy between the first portion and the second portion.

**12.** The method of any of claims 9 to 11, wherein the third portion is configured to transfer vibrational loads between the first portion and the second portion.

**13.** The method of any of claims 9 to 12, further comprising forming the interior wall and the exterior wall such that the interior wall and the exterior wall are separated by a gap that defines a barrier void, wherein the barrier void forms a flow path envelope surrounding the interior container.

**14.** The method of any of claims 9 to 13, further comprising forming the interior wall and the exterior wall such that the interior wall and the exterior wall are separated by a gap that defines a barrier void, wherein the barrier void is in fluid communication with a drain port of the vessel.

**15.** The method of any of claims 9 to 14, further comprising forming the lattice structure of the third portion to include a truss pattern.
